Europäisches Patentamt

European Patent Office

Office européen des brevets

(19)

(11) Publication number: **0 377 290**
**A1**

# EUROPEAN PATENT APPLICATION

(21) Application number: 89312984.1

(22) Date of filing: 12.12.89

(51) Int. Cl.5: **B01D 53/36, B01J 37/00**

(30) Priority: 06.01.89 US 294112

(43) Date of publication of application:
11.07.90 Bulletin 90/28

(84) Designated Contracting States:
DE FR GB IT

(71) Applicant: GENERAL MOTORS CORPORATION
General Motors Building 3044 West Grand
Boulevard
Detroit Michigan 48202(US)

(72) Inventor: Ball, Douglas J.
16430 Hilltop Drive
Linden Michigan 48451(US)

(74) Representative: Haines, Arthur Donald et al
Patent Section (F6) Vauxhall Motors Limited
P.O. Box 3 Kimpton Road
Luton, Beds. LU2 OSY(GB)

(54) Silica catalyst support for reduced sulphate emissions from diesel-fuelled engines.

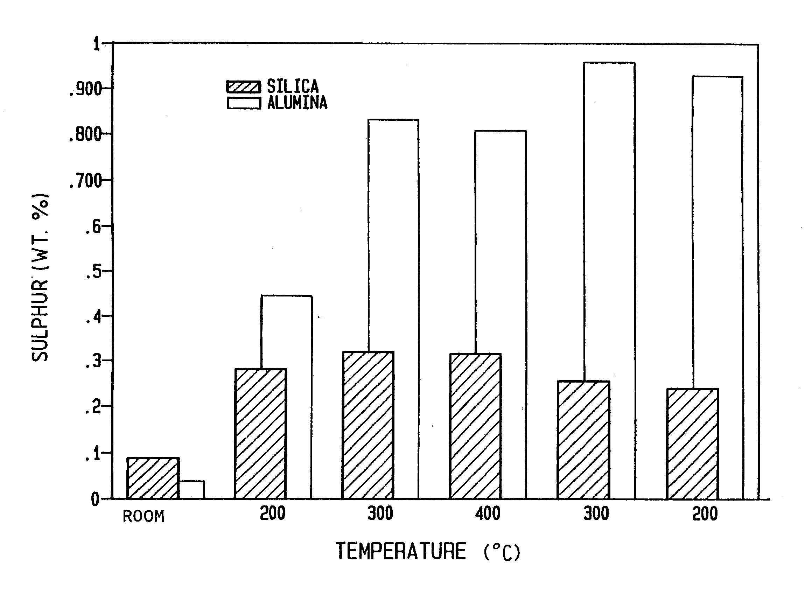

(57) The preferred embodiment suggests a method and catalyst useful to effect the oxidation of carbon monoxide and unburned hydrocarbons present in a diesel exhaust stream generated in the combustion of diesel fuel containing from 0.005 to 0.7 weight percent sulphur, wherein the exhaust gas stream is contacted with said catalyst comprising silica impregnated with one or more noble metals, and optionally with one or more promoters, the type of silica being selected on the basis of its ability to absorb no more than 0.4 weight percent sulphur at temperatures between 200°C and 400°C, as shown in the drawing accompanying the specification.

EP 0 377 290 A1

## SILICA CATALYST SUPPORT FOR REDUCED SULPHATE EMISSIONS FROM DIESEL-FUELLED ENGINES

This invention relates to a method of treating a diesel exhaust gas stream as specified in the preamble of claim 1, for example as disclosed in US-A-4,303,552. More particularly, this invention discloses a method of oxidizing carbon monoxide and hydrocarbons present in a diesel exhaust gas stream, while concurrently minimizing sulphate emissions therefrom, through the use of a silica-supported noble metal catalyst.

Background of the Invention

It would be desirable to reduce carbon monoxide, hydrocarbons, and particulates emitted from diesel-fuelled engines. To achieve these ends, vehicle manufacturers are exploring various engine design and fuel control strategies. In addition, extensive research focusing on post-engine exhaust purification methods is being conducted.

For approximately fifteen years, carbon monoxide and hydrocarbons present in emissions have been very successfully controlled by catalytic means. Specifically, noble metals, used alone or in combination with one or more promoters, and carried on alumina beads or pellets have proven highly effective in the simultaneous oxidization of carbon monoxide and hydrocarbons to carbon dioxide. While such catalysts have led to favourable emissions from gasoline-fuelled combustion engine exhaust streams, they have been only nominally successful in the treatment of diesel exhaust. Sulphur, present in significantly higher concentrations in diesel fuel than in gasoline, is concurrently oxidized with the carbon monoxide and hydrocarbons to various sulphur oxides. Sulphur dioxide ($SO_2$) is an allowable diesel engine emission constituent; sulphur trioxide ($SO_3$) and sulphates ($SO_4^{--}$) are deemed particulates. Hence, an attempt to reduce carbon monoxide and hydrocarbon emissions through the use of alumina-supported noble metal catalysts invariably produces gross amounts of particulates. This feature precludes the efficient use of alumina-carried noble metal catalysts in the treatment of diesel exhaust.

While alternative carrier materials, such as ceria, silica, and other refractory inorganic oxides, have been proposed for use in both gasoline and diesel-fuelled engines, none has enjoyed a degree of use and acceptance in the scientific community comparable to that enjoyed by alumina. No known prior art discloses any recognition of the unique sulphur storage problems associated with diesel exhaust purification catalysts. The prior art teaches nothing about controlling sulphur-containing emissions through novel catalyst support materials.

The automobile industry would find great advantage in utilizing a method of exhaust purification which minimizes such deleterious sulphur oxidations. Further, the automobile industry would find great advantage in a diesel exhaust purification method involving a noble metal carried by a suitable support bead or pellet. The prior art fails to disclose such a method which addresses the special complications posed by the presence of sulphur in diesel fuels. The applicants sought to develop a method which addresses and appreciates these complications.

Summary of the Invention

A method of oxidizing carbon monoxide and hydrocarbons present in a diesel engine exhaust stream in accordance with the present invention is characterised by the features specified in the characterising portion of claim 1.

Accordingly, it is an object of this invention to provide a method by which hydrocarbons and carbon monoxide present in a diesel engine exhaust stream are oxidized to carbon dioxide and water through the use of a noble metal catalyst carried by a support material, wherein the support material selected results in sulphate emissions that are significantly less than those associated with an alumina carrier. It is a further object of this invention to accomplish these oxidations in a cost-efficient manner. A silica-based carrier, both inexpensive, and tending to absorb notably less sulphur than alumina, provides a useful means of realizing these objects. Silica further permits the realization of these advantages without sacrificing the nearly complete carbon monoxide-hydrocarbon oxidation associated with an alumina carrier.

These and other concomitant features and advantages of this invention will become apparent through the following description and accompanying drawing.

Brief Description of the Drawing

The accompanying drawing is a bar graph comparing the sulphur storage features of silica and alumina as a function of exhaust stream temperature and exposure time.

Detailed Description of the Invention

Diesel engine exhaust typically comprises components of the following four constituent classes: nitric oxides, carbon monoxide, low molecular weight hydrocarbons, and particulates. Within the class of particulates are carbon (soot), ash, high molecular weight hydrocarbons (particularly aromatic hydrocarbons), water, and sulphate compounds.

Reduced particulate emissions may be accomplished in a number of ways. Improved engine design and fuel-control strategies can lead to more acceptable emission levels. Such preventative technologies are particularly appealing as they theoretically eliminate, rather than merely treat emission problems. In the absence of ideal conditions, however, a post-engine treatment device is necessary for optimal purification. One type of post-engine treatment device is the catalytic converter.

Catalytic converters can be successfully utilized when engine development by a manufacturer results in engine performance near design targets. Within the catalytic converter, the exhaust stream passes over a bed of noble metal-impregnated silica balls or pellets effecting the near-complete oxidation of hydrocarbons and carbon monoxide. A potential undesirable competing reaction is the oxidation of sulphur dioxide to sulphur trioxide. The sulphur trioxide may further react with water in the exhaust stream to form sulphate compounds, such as sulphuric acid. Catalytic converters are designed to maximize the oxidation of the organic particulates, minimize the further oxidation of sulphur dioxide, and allow the ash and elemental carbon particulates to exit, unaltered, with the exhaust gas stream. Associated advantages are simplicity of design, and cost-effectiveness.

In the diesel engine combustion chamber, between 95 percent and 99 percent of the sulphur present in the diesel fuel is oxidized to sulphur dioxide. The remaining one percent to five percent exists in higher sulphur oxidation states, such as sulphate. The present invention does not reduce sulphates produced in the diesel engine combustion chamber to sulphur dioxide, i.e., the one percent to five percent of the sulphur present in diesel fuel which are oxidized to oxidation states higher than sulphur dioxide, enter into and exit from the catalytic converter unchanged. However, the applicants have discovered that, whilst silica-supported noble metal catalysts do not reduce formed sulphates, they significantly minimize the oxidation of sulphur dioxide to higher oxidation states within the catalytic converter. Indeed, they prevent the formation of sulphates to a much greater degree than their alumina counterparts.

Having recognized the advantageous behavior exhibited by silica, the inventor of the present invention conducted experiments designed to explain his findings. Without wishing to be bound by theory, he believes that one way in which these higher oxidation states are formed in and discharged from the catalytic converter is through an adsorption-release mechanism. In the case of an alumina support, sulphur dioxide may be adsorbed by the catalyst support material as aluminium sulphate. Upon saturation, an increase in exhaust temperature will release sulphate species into the exhaust stream. Such sulphate species generally exist as sulphuric acid, due to the presence of water in the exhaust stream. The inventor has found that a silica support has the remarkable and unexpected tendency to adsorb and release sulphur to a significantly lesser degree than alumina. This tendency makes the use of silica-supported noble metal catalysts both feasible and desirable for use in the purification of diesel engine exhaust.

The relative rates of the carbon monoxide/hydrocarbon oxidations and sulphur dioxide oxidations are different. In general, the amount of carbon monoxide and hydrocarbons oxidized to carbon dioxide and water is maximized, and the further oxidation of sulphur dioxide is concurrently minimized, when the inlet converter temperatures are between 200° C and 300° C. Whilst in the case of an alumina substrate, the amount of sulphur particulate emitted becomes significant, and may indeed outweigh the amount of an organic fraction oxidized at exhaust stream temperatures above 300° C, novel diesel substrates, such as silica, by reducing the amount of sulphur stored and released, to large extent obviate this effect.

While consideration of the kinetics of the carbon monoxide, hydrocarbon and sulphur dioxide oxidations may lead to relatively desirable results, sulphates will be produced in the catalytic converter, regardless of the temperature selected.

Further, such sulphate production will occur to a certain extent regardless of the carrier utilized. This invention recognizes, however, that silica-supported noble metal catalysts lead to the emission of approximately 56 percent less sulphates than their alumina-supported counterparts.

Discussion of Drawing

The accompanying drawing comprises two super-imposed bar graphs of the weight percent sulphur absorbed by alumina and silica carrier materials expressed as a function of exhaust stream temperature and exposure time. To obtain this data, noble metal-impregnated silica and alumina-supported catalysts were individually exposed to a diesel exhaust stream maintained at temperatures systematically varied from 200° C to 300° C to 400°C to 300°C, and to 200°C. The exposure time at each temperature was 50 hours. The same silica and alumina-supported catalysts were used throughout the experimental procedure. Thus, both the silica and alumina catalysts were exposed to the exhaust stream for 250 hours. The weight percent sulphur was measured by x-ray fluorescence after each 50 hour exposure.

This experiment revealed the tendency of silica to absorb much less sulphur than alumina. While sulphur absorptions by alumina levelled off at a concentration of between 0.8 and 0.97 weight percent, sulphur absorptions by silica peaked at approximately 0.33 weight percent. Thus, silica absorbs approximately two-thirds less sulphur than alumina.

In addition, alumina has the tendency to release much larger amounts of sulphur (and its various adsorbed oxides) than silica during temperature excursions. Upon an increase in exhaust temperature from room temperature to 400°C, the amount of sulphur absorbed by the alumina support increased from approximately 0.05 weight percent to approximately 0.8 weight percent. A subsequent decrease in exhaust temperature led to a further increase in sulphur absorption to approximately 0.93 weight percent. This increased absorption as a result of decreased temperature is a phenomenon recognized by adsorption theory. Upon a subsequent increase in exhaust gas temperature, the alumina theoretically should absorb less sulphur (0.8 weight percent). Thus, sulphur and its adsorbed oxides will potentially be released during increases in temperature upon saturation of the alumina with sulphur.

A comparison of the silica portion of the graph indicates dissimilar behavior. The fresh catalyst contained 0.1 weight percent sulphur. Upon exposure to diesel exhaust gas for 50 hours at 200°C, the concentration of sulphur increased to approximately 0.3 weight percent. The data indicate that for exhaust temperatures in the range of 200°C and 400°C, the sulphur adsorption capacity of silica should remain relatively constant. Hence, contrary to the disadvantageous features of the alumina support, upon a subsequent increase in exhaust gas temperature, one would not expect a deleterious release of sulphur and its adsorbed oxides from the silica support.

The method utilized in testing the catalysts in the preparation of these bar graphs provides the basis for selecting an appropriate silica carrier. A fresh sample of the proposed noble metal and/or promoter-impregnated silica is exposed to diesel exhaust at temperatures of 200°C, 300°C, 400°C, 300°C, and 200°C for 50 hours at each temperature, respectively. In a final aspect of the test, the candidate sample is again heated in diesel exhaust at 300°C and 400°C for 50 hours at each temperature. Thus, the total test is 350 hours. The same catalyst sample should be used throughout the duration of the testing process. The catalyst is analyzed for sulphur adsorption after each 50 hour exposure. X-ray fluorescence is one possible analytical procedure which may be employed to make this determination. At no time during this testing procedure should the sulphur adsorption exceed 0.4 weight percent.

Diesel fuel typically contains approximately 0.25 weight percent sulphur. While it is anticipated that this invention may be successfully utilized in regulating emissions formed through the use of any commercially available diesel fuel, the benefits of this invention can be most fully enjoyed when sulphur concentrations in the fuel are between 0.005 and 0.7 weight percent.

Any type of amorphous silica material having the tendency to absorb less than 0.4 weight percent sulphur will permit realization of the objects of this invention. Typically, by varying the substrate form, crush strength, surface area, and bulk density, a catalyst carrier can be developed to lead to desirable emission levels. Typical substrate forms are pellets, beads, and silica-coated monoliths.

While bead diameters are preferably between three millimetres and seven millimetres, beads of diameters between two millimetres and eight millimetres may be successfully utilized. While typical crush strengths are between 6.81 Kg (15 pounds) and 13.62 Kg (30 pounds), crush strengths as low as 4.54 Kg (10 pounds) are acceptable. Typical surface areas are between 90 m$^2$/g and 275 m$^2$/g. While typical bulk densities are between 480.5 Kg/m$^3$ (30 lbs/ft$^3$) and 640.7 Kg/m$^3$ (40 lbs/ft$^3$), it is expected that the range can be extended from 400.5 Kg/m$^3$ 25 lbs/ft$^3$) to 720.8 Kg/m$^3$ (45 lbs/ft$^3$).

One or more noble metals in possible combination with one or more promoters should impregnate the silica substrate. Suitable noble metals comprise one or more of the following: platinum, palladium, and rhodium. Preferably, platinum and palladium are used separately or in combination with each other. Loadings range from 439.4g/m$^3$ 0.4 troy oz/ft$^3$) to 2910.8 g/m$^3$ (2.65 troy oz/ft$^3$). Promoters include other precious metals and base metal oxides used in combination with the platinum, palladium, and/or rhodium. Examples of suitable promoters are gold, silver, vanadia, ceria, lanthana, and neodymia.

The following list of salts, while not exhaustive, will aid in the selection of appropriate starting materials. Four suitable platinum salts are platinum amine chloride, platinum amine hydroxide, chloroplatinic acid, and hexahydroxyplatinic acid. Palladium amine chloride, palladium amine nitrate, palladium chloride, and palladium nitrate are possible palladium salts. Rhodium hexamine chloride, rhodium pentaamine chloride, rhodium chloride, and rhodium nitrate are four suitable rhodium alternatives. All of the above are soluble in water.

Should a promoter be required, the following list provides possible salts. Gold chloride, silver nitrate, cerium chloride, cerium nitrate, cerium carbonate, cerium oxide, cerium ammonium nitrate, lanthanum nitrate, lanthanum oxide, lanthanum carbonate, neodymium nitrate, neodymium oxide, neodymium carbonate, and vanadium (IV) chloride are readily available. All are water-soluble with the exception of vanadium (IV) chloride, which is soluble in ethanol.

The silica substrate is prepared utilizing methods known to those skilled in the art. Solutions are prepared of one or more noble metals alone or in combination with solutions of one or more promoters. Solutions of cerium, lanthanum, neodymium, and vanadium salts are prepared such that the concentration is between one and 40 weight percent. Solutions of platinum, palladium, rhodium, gold, and silver salts are prepared such that the concentration is between 0.001 and five weight percent. Solutions can be applied to the silica beads by conventional methods, such as by spraying or soaking, or by other suitable means known to those skilled in the art.

The length of time during which the substrate is in contact with the salt solution(s) is technique-dependent. When the substrate is soaked in the salt solutions, appropriate contact times are between 15 seconds and one minute. When the substrate is instead sprayed with the salt solution(s), appropriate contact times are between one and 15 minutes. The impregnated substrate is thereafter calcined at a temperature preferably between 400°C and 500°C (but optionally from 350°C to 600°C) for approximately one hour. Calcination may preferably occur in an oxidizing or a hydrogen-rich atmosphere.

While in no way meant to limit the scope of the present invention, the following example is provided as an illustration.

### Example 1

In a preferred embodiment of this invention, the catalyst utilized is prepared in the following manner. 1.55 grams platinum from platinum amine chloride is dissolved in one litre of water. Optionally, 168 grams cerium from cerium ammonium nitrate is dissolved in the solution. Silica beads having diameters from 3 mm to 7 mm, crush strengths from 6.81 Kg (15 lbs) to 13.62 Kg (30 lbs), surface areas from 90 mm²/g to 275 mm²/g, and bulk densities from 480.5 Kg/m³ (30 lbs/ft³) to 640.7 Kg/m³ (40 lbs/ft³) are commercially available. The procured silica beads are soaked in the prepared solution for 15 seconds, or until the solution has been absorbed. Suitable noble metal loading amounts are in the range of 423.8 g/m³ (12 grams/ft³) and 4238 g/m³ (120 grams/ft³). Suitable promoter loading amounts are in the range of 423.8 g/m³ (12 grams/ft³) and 52,972 Kg/m³ 1500 grams/ft³). The beads are thereafter calcined for one hour at a temperature between 400°C and 500°C in an oxidizing or a hydrogen-rich atmosphere.

## Claims

1. A method of oxidizing carbon monoxide and hydrocarbons present in a diesel engine exhaust stream to carbon dioxide and water, said method comprising: contacting said diesel exhaust stream with silica support materials of suitable size and surface area, wherein said silica support materials are impregnated with one or more noble metals, and optionally with one or more promoters, characterised in that the type of said silica support material utilized is selected on the basis of its ability to absorb a maximum of 0.4 weight percent sulphur, as measured by x-ray fluorescence, when subjected to testing conditions wherein a test stream of diesel exhaust gas is allowed to pass over said silica support material for 350 hours, during which time the test stream temperature is first increased from 200°C to 300°C to 400°C, aging said silica support material for 50 hours at each temperature, and is thereafter decreased from 400°C to 300°C to 200°C, aging said silica support material for 50 hours at each of the two latter temperatures, and is thereafter increased again from 200°C to 300°C to 400°C, aging said silica support material for 50 hours at each of the latter two temperatures, so that, when said diesel engine exhaust stream is generated by a diesel engine utilizing diesel fuel containing between 0.005 and 0.7 weight percent sulphur, said hydrocarbons and carbon monoxide present in said diesel exhaust stream are oxidized to carbon dioxide whilst the oxidation of sulphur dioxide present in said diesel exhaust stream to sulphur trioxide and sulphates is concurrently minimized.

2. A method of oxidizing carbon monoxide and hydrocarbons present in a diesel engine exhaust stream to carbon dioxide and water according to claim 1, in which said one or more noble metals comprises platinum, palladium and/or rhodium.

3. A method of oxidizing carbon monoxide and hydrocarbons present in a diesel engine exhaust stream to carbon dioxide and water according to claim 1, in which said one or more promoters comprises gold, silver, vanadia, ceria, lanthana and/or neodymia.

4. A catalyst useful to oxidize carbon monoxide and hydrocarbons present in a diesel engine exhaust stream to carbon dioxide and water, which catalyst comprises: a silica substrate impregnated with a suitable amount of one or more noble metals and optionally with a suitable amount of one or more promoters, characterised in that the type of said silica substrate is selected on the basis of its ability to absorb no more than 0.4 weight percent sulphur, as measured by x-ray fluorescence, when subjected to testing conditions whereby a test stream of diesel exhaust gas is allowed to pass over said silica support material for 350 hours, during which time the test stream temperature is first increased from 200°C to 300°C to 400°C, aging said silica substrate for 50 hours at each temperature, and is thereafter decreased from 400°C to 300°C to 200°C, aging said silica substrate for 50 hours at each of the two latter temperatures, and is thereafter increased again from 200°C to 300°C to 400°C, aging said silica substrate for 50 hours at each of the latter two temperatures, so that, when said catalyst is used to treat a diesel engine exhaust stream generated by a diesel engine utilizing diesel fuel containing between 0.005 and 0.7 weight percent sulphur, the oxidation of sulphur dioxide present in said diesel engine exhaust stream to sulphur trioxide and sulphates is concurrently minimized.

5. A catalyst according to claim 4, in which said one or more noble metals comprises platinum, palladium and/or rhodium.

6. A catalyst according to claim 4, in which said one or more promoters comprises gold, silver, vanadia, ceria, lanthana and/or neodymia.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 263 817  (NATIONAL DISTILLERS AND CHEMICAL CORP.) <br> * Page 7, lines 24-25; page 18, lines 2-10; page 4, lines 9-21; page 7, lines 1-11 * <br> --- | 1-6 | B 01 D  53/36 <br> B 01 J  37/00 |
| A | EP-A-0 246 031  (ATOMIC ENERGY OF CANADA) <br> --- | | |
| A | US-A-3 897 366  (HARUTOKI NAKAMURA) <br> ----- | | |
| | | | TECHNICAL FIELDS SEARCHED (Int. Cl.5) |
| | | | B 01 D |

The present search report has been drawn up for all claims

| Place of search | Date of completion of the search | Examiner |
|---|---|---|
| THE HAGUE | 19-04-1990 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                             

& : member of the same patent family, corresponding document

EPO FORM 1503 03.82 (P0401)